# EUROPEAN PATENT APPLICATION

(11) **EP 3 328 061 A1**
(43) Date of publication of application: **30.05.2018**
(21) Application number: 16306572.5
(22) Date of filing: 29.11.2016
(51) Int. Cl.: H04N 5/232, G06T 5/40, G06T 5/50

(54) **DEVICE AND METHOD FOR GENERATING A MOTIONLESS PICTURE**

(71) Applicant: Thomson Licensing, 92130 Issy-les-Moulineaux (FR)
(72) Inventor: ELUARD, Marc, 35576 Cesson-Sévigné (FR); MAETZ, Yves, 35576 Cesson-Sévigné (FR)
(74) Representative: Huchet, Anne

(57) **Abstract**

A device for producing an image of a scene in which the moving elements have been removed while capturing the scene. The device (100) captures (310, 350) a set of images through a camera (120), performs image analysis to remove the moving elements, generates an intermediate image and decides (340) either to pursue the capture to obtain more data or to stop the capture when it considers the image satisfying. The intermediate image is preferably displayed on a screen (150) of the device so that the user sees the effect of the feature during the capture. The corresponding method is also disclosed.

## Description

### TECHNICAL FIELD

The present disclosure relates to the domain of digital photography and more precisely describes a device and a method for producing an image of a scene in which moving elements have been removed while capturing the scene.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Photography has faced a digital revolution, allowing many features previously impossible with the chemical process required to reveal the picture. Digital cameras nowadays include image processing algorithms to enhance the quality of the captured images, such as stitching images together to create panoramas or to add effects like using a particular color space. Digital image capturing is now widespread thanks to the integration of the feature in smartphones.

However, there are still at least one situation were the capture is not satisfying for the user. When a photographer takes a picture of a touristic place or monument, the result is often a picture where the monument is partly masked by people walking in front of it or vehicles driving by. One solution for that is to wait until the monument is free of tourists but it may require much time and is not always possible. Another solution is to capture multiple pictures and use an image edition tool to extract from the set of pictures the areas representing the monument and stich them together manually. However this technique is time consuming and requires skill to handle the image editing tools.

Some automated techniques have been proposed. US20120320237A1 discloses a photo processing method of a digital camera, including capturing a plurality of photos of a scene, comparing the photos to identify a moving part of the photos, choosing one of the plurality of photos as a source photo, replacing the moving part of the source photo according to a non-moving part of at least one of the non-source photos and outputting the modified source photo. This solution is not very user friendly since the user has to select manually the unwanted of the captured areas of the pictures. US20150022698A1 discloses a device and method for processing an image in a device having a camera to remove unwanted moving objects. A photographing interval and duration is determined in accordance with the motion vector. This solution is at least not robust to change of direction of objects moving in the scene to be captured.

It can therefore be appreciated that there is a need for a solution for producing an image that addresses at least some of the problems of the prior art. The present disclosure provides such a solution.

### SUMMARY

The present disclosure describes a device and method for producing an image of a scene in which the moving elements have been removed while capturing the scene. The device captures a set of images, performs image analysis to remove the moving elements, generates an intermediate image and decides either to pursue the capture to obtain more data or to stop the capture when it considers the image is satisfying. Advantageously, the intermediate image is displayed on the screen of the device so that the user sees the effect of the feature during the capture.

In a first aspect, the disclosure is directed to a device for producing an image of a scene, the device comprising a camera configured to capture digital photographs of the scene, each digital photograph comprising an array of pixels; memory to store a set of digital photographs of the scene; and a processor configured to iterate until a stopping condition is met, wherein an iteration comprises capturing a digital photograph of the scene and append the digital photograph to the set of digital photographs of the scene, generating an intermediate image from the set of digital photographs by, for each pixel of the intermediate image, selecting a corresponding pixel value from a digital photograph of the set of digital photographs of the scene; and determining whether the stopping condition is met and in this case stop the iteration; and output the intermediate image as final image of the scene. The stopping condition is either one of the following conditions or any combination of at least two of the following conditions: the number of digital photographs captured is higher than a threshold; the number of pixels changing between two consecutive intermediate images is below a threshold; the number of pixels changing between two consecutive intermediate images is below a threshold and the changing pixel are not concentrated in a particular area; or the minimal trust level for all pixels is higher than a threshold, the trust level being computed for each pixel by dividing the number of occurrences of the selected value of the pixel by the total number of captures. In a variant embodiment of the first aspect, the device further comprises a screen configured to display the intermediate images. In a variant embodiment of the first aspect, the processor is further configured to select, for each pixel, the corresponding pixel value with the highest occurrence among the set of digital photographs. In a variant embodiment of the first aspect, the iteration is performed in a first time on downscaled images and when the criterion for output is satisfied, the iteration is performed a second time on the full resolution images.

In a second aspect, the disclosure is directed to a method for producing an image of a scene, the method comprising iterating until a stopping condition is met, wherein an iteration comprises capturing a digital photograph of the scene and appending to a set of digital photographs of the scene; generating an intermediate image from the set of digital photographs by, for each pixel of the intermediate image, selecting a corresponding pixel value from a digital photograph of the set; determining whether the stopping condition is met and in this case stop the iteration; and outputting the intermediate image. The stopping condition is either one of the following conditions or any combination of at least two of the following conditions: the number of digital photographs captured is higher than a threshold; the number of pixels changing between two consecutive intermediate images is below a threshold; the number of pixels changing between two consecutive intermediate images is below a threshold and the changing pixel are not concentrated in a particular area; or the minimal trust level for all pixels is higher than a threshold, the trust level being computed for each pixel by dividing the number of occurrences of the selected value of the pixel by the total number of captures. In a variant embodiment of the second aspect, the device further comprises a screen configured to display the intermediate images. In a variant embodiment of the second aspect, the processor is further configured to select, for each pixel, the corresponding pixel value with the highest occurrence among the set of digital photographs. In a variant embodiment of the second aspect, the iteration is performed in a first time on downscaled images and when the criterion for output is satisfied, the iteration is performed a second time on the full resolution images.

In a third aspect, the disclosure is directed to a computer program comprising program code instructions executable by a processor for implementing any embodiment of the method of the second aspect.

In a fourth aspect, the disclosure is directed to a computer program product which is stored on a non-transitory computer readable medium and comprises program code instructions executable by a processor for implementing any embodiment of the method of the second aspect.

### BRIEF DESCRIPTION OF DRAWINGS

Preferred features of the present disclosure will now be described, by way of nonlimiting example, with reference to the accompanying drawings, in which
Figure 1 illustrates an exemplary apparatus of an image capture device in which the disclosure may be implemented;
Figure 2A and 2B illustrate an exemplary situation where an image capture device 100 in which the disclosure is implemented and helpful for a photographer;
Figure 3 illustrates an exemplary flowchart of implemented method according to an embodiment of the disclosure;
Figure 4A, 4B, 4C illustrate exemplary image captures by a device 100 in which the disclosure is implemented, capturing a simple situation;
Figures 4D, 4E, 4F are symbolic representations of a histogram used as basis for the selection process in the situation of figures 4A, 4B, and 4C;
Figure 5A, 5B, 5C illustrate second exemplary image captures by a device 100 in which the disclosure is implemented, capturing a situation with overlaps of moving elements;
Figures 5D, 5E, 5F are symbolic representations of the histogram used as basis for the selection process in the situation of figures 5A, 5B, and 5C.

### DESCRIPTION OF EMBODIMENTS

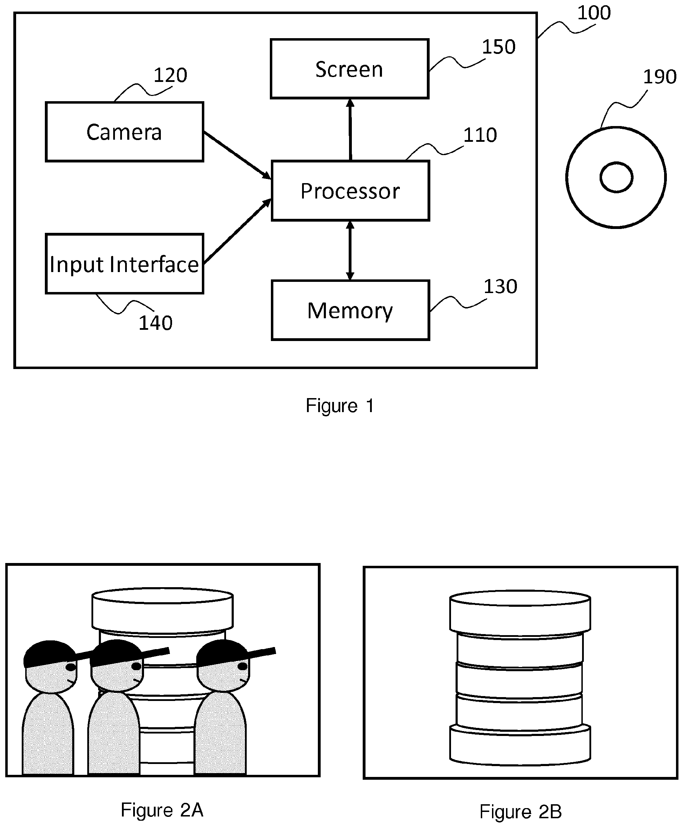

**Figure 1** illustrates an exemplary apparatus of an image capture device 100 in which the disclosure may be implemented. The skilled person will appreciate that the illustrated device is very simplified for reasons of clarity. According to a specific and non-limiting embodiment of the principles, the image capture device 100 comprises at least a hardware processor 110 configured to execute a method of at least one embodiment of the present disclosure, a camera 120 configured to capture images, memory 130 configured to store at least the captured images, an input interface 140 configured to enable the user to control the device and activate features, and preferably a screen 150 configured to display at least the captured images. A non-transitory computer readable storage medium 190 stores computer readable program code that is executable by the processor 110 to perform at least one of the methods described herein. The processor 110 can be realized by a combination of single or multiple processors, co-processors and graphical processing units.

In a preferred embodiment, the device 100 is integrated into a smartphone. In such embodiment, the input interface 140 is a touch screen interface and the device functions can be activated by interacting with the touch screen. In another embodiment, the device 100 is a standalone a digital camera. In such embodiment, the input interface 140 conventionally uses physical buttons to activate the device functions.

**Figure 2A and 2B** illustrates an exemplary situation where an image capture device 100 in which the disclosure is implemented and helpful for a photographer. Figure 2A shows the screen of a conventional image capture device such as a digital camera utilized by a photographer positioned in front of a monument that he wants to capture. In this drawing, the monument is symbolized by a simple colon for the sake of simplicity. However, the monument is partly masked by people walking in front of the monument, making the capture difficult with a conventional image capture device: the user must wait until no more people are masking the monument which is not always possible. Figure 2B is the picture that the image captured using the image capture device 100 in which the disclosure is implemented: the people walking in front of the monument have been removed as described below, resulting in an image including only the monument, as desired by the photographer.

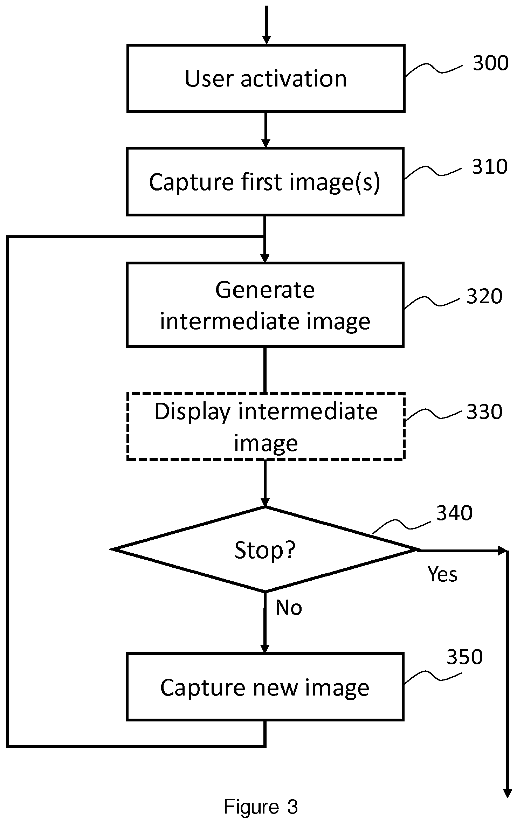

**Figure 3** illustrates an exemplary flowchart of implemented method according to an embodiment of the disclosure. The motionless capture is started upon activation of the feature by the user, in step 300, through the user input interface 140. In step 310, at least one first image is captured. Preferably, three images are captured successively with a delay between consecutive captures. The delay is preferably constant and chosen so that the processor has enough time to make the computations required between successive captures. A value of one second is satisfying and allows to perform the whole capture in an acceptable time. Devices with less computing power will increase the delay, for example up to several seconds, to get enough time to perform the computations. Capturing three images instead of a single one allows to bootstrap the generation of a first intermediate image, since with fewer captured image, there is not enough data to take a well informed decision.

In step 320, an intermediate image is generated by selecting, for each pixel of the image, a value according the values of corresponding pixels in previously captured images. In the preferred embodiment, the selection is done by a simple voting mechanism: for a given pixel, the value being the most frequently captured is selected. In case of equality, one of the values is selected randomly or in any other suitable manner. This step requires some kind of mechanism to track the pixel value occurrences. A first technique is to maintain a histogram for each pixel, allowing the processor to count the occurrence of the values for each pixel and to select the one with the highest occurrence. More complex image processing algorithms than simple voting can be used for the selection step, for example taking into account the neighbourhood or the motion of pixels. However it is important to select a pixel value and not an average of the pixel values as that can result in an unrealistic image.

In step 330, the intermediate image is optionally displayed to the user through the screen 150. This allows the photographer to see the moving elements disappear gradually since the pixels corresponding to them are no more chosen in the pixel selection step 320.

In step 340, a stopping condition is tested, deciding if the intermediate image can be considered as the final image or if the process still needs to iterate to improve the intermediate image. The stopping condition may be chosen among the following conditions: predefined mode where a predetermined number of captures is performed, manual mode where the user decides when to stop through the input interface and the auto-stop mode where the processor 110 determines if the intermediate image is "good enough". The choice between one of those modes is done in a configuration phase of the device. The auto-stop mode itself can use different conditions to decide when to stop. A first condition relates to the pixel stability: if the proportion of unchanged pixels in the last intermediate image compared to the previous one is higher than a threshold, for example expressed as a percentage of the total number of pixels, then the image is considered as stable and the process is stopped. Optionally, this first condition could be complemented by a second condition for which the position of the changed pixels in the image is considered. Indeed, when only a few pixels are changed between consecutive intermediate images (according to the first condition) but if those pixels are located in the same area of the image, the impact is considered as being important and the capture must continue. This can for example correspond to a case where most of the image was stable but a car previously immobile started to move. Conversely, when the changed pixels are dispatched throughout the image, the image is considered as stable and the process is stopped. To determine the areas, the picture may be cut in n sectors, each pixel receives a weight corresponding to the number of changes to these k neighbours. Thus, if the weight of a pixel exceeds a threshold, the area surrounding that pixel is considered to have changed. Multiple stopping conditions can be combined together to form a unique stopping condition. One example is to require at least 5 captures and to stop automatically when reaching 95% pixel stability condition (less than 5% pixels have changed), thus combining two stopping conditions introduced above.

When the stopping condition is not met, the processor captures another image in step 350 after having optionally waited for a delay similar to the delay introduced here above in step 310 and iterates again through steps 320 to 340. A maximal number of iterations or a maximal duration can be defined to force the stop of the process and prevent endless captures. Such situation could appear in the case of a scene including constantly moving elements.

In an alternate embodiment, the process is not stopped the first time that a stopping condition is achieved but only when a stopping condition is achieved multiple times in a row.

In an alternate embodiment, once a minimal level of certainty of the value of one pixel is obtained, the pixel is locked so that no further changes will be done to this pixel. In this case, the stopping condition is triggered when the proportion of locked pixels in the intermediate image is higher than a threshold. Good certainty of a pixel value can be determined according to different rules based for example on a minimal number of occurrences, a minimal proportion of occurrences, a minimal distance towards the next candidate value or a combination of these rules.

In another alternate embodiment, a trust level is assigned to each pixel, corresponding directly to the number of occurrences of the chosen value divided by the total number of captures. In this case, the stopping condition is triggered when the minimal trust level is higher than a threshold, for example 0.7.

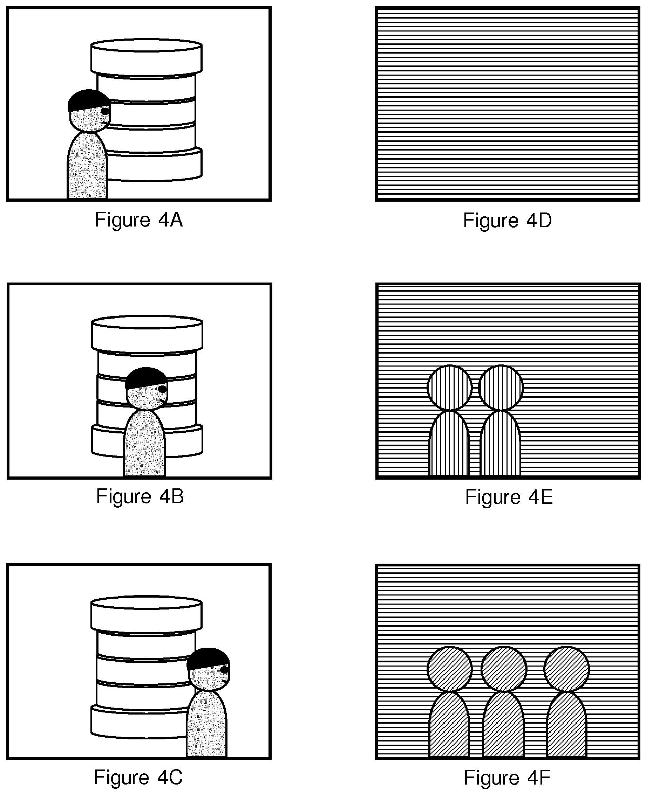

**Figure 4A, 4B, 4C** illustrate exemplary image captures by a device 100 in which the disclosure is implemented, capturing a simple situation. Figure 4A is the first image capture. In this figure, the colon represents the monument to be captured. The figure shows the monument being partly masked by a person walking in front of it. Figure 4B is the second image capture. Here again the person partially masks the colon, as well as in the third image capture illustrated in figure 4C.

**Figures 4D, 4E, 4F** are symbolic representations of a histogram used as basis for the selection process in the situation of figures 4A, 4B, and 4C. In these figures, pixel areas having identical number of color differences are filled with a same pattern. In figure 4D, after capturing a first image, all pixels have one occurrence, symbolized by the horizontal hatching. In figure 4E, after the second capture, the areas with vertical hatching are uncertain since the captured pixels have two values. For the area with horizontal hatching, the values did not change between the two captures. In figure 4F, after the third capture, the areas with diagonal hatching have two different values but the processor is now able to decide since one value correspond to the "background" monument and it is present twice while the other value correspond to the person and is only present once. In this simple situation, after three captures, the method is able to generate a motion less image where the moving person has been removed, resulting in the picture of figure 2B, by selecting for each pixel the pixel value having the highest occurrence.

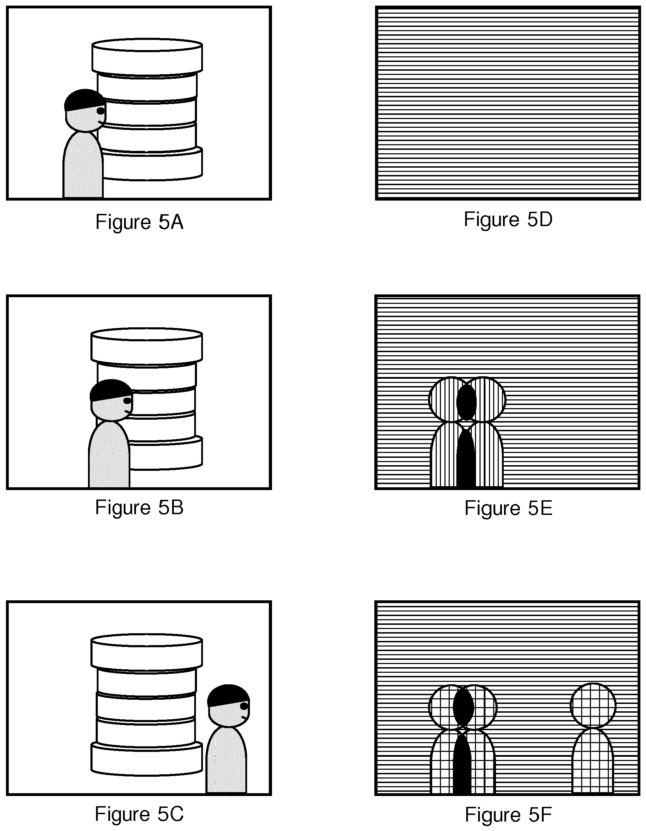

**Figure 5A, 5B, 5C** illustrate second exemplary image captures by a device 100 in which the disclosure is implemented, capturing a situation with overlaps of moving elements. **Figures 5D, 5E, 5F** are symbolic representations of a histogram used as basis for the selection process in the situation of figures 5A, 5B, and 5C. In this example the person does not move very fast so that there are some overlaps between figures 5A and 5B, requiring more steps for the selection. Indeed, as illustrated in figure 5F, the area represented in black comprises three different values of pixels, one from each of the capture. In this case, the value to be selected cannot be decided: one of the values is chosen arbitrarily and additional captures need to be done. In further captures, the area represented in black will get pixels values corresponding to the "background" monument so that the selection of the correct pixel value will be possible to select those pixels of the background since they will have the highest occurrence.

In the embodiment using trust level, the areas represented in black would have a trust level of 0.333 since three different values have been captured in a total of three captures.

The description of the invention has been done at the pixel level for the sake of simplicity but the person skilled in the art will appreciate that the use of more efficient image algorithms could improve the efficiency or quality of the result, for example using motion vectors or neighbourhood information, without altering the principles of the disclosure. From another point of view, the calculations done at the pixel level also favour the parallelization of the computations resulting in good performances when using the processor adapted to such parallelization.

In another embodiment, the image generation process is first performed on reduced resolution versions of the captured images, allowing better performances in terms of computing resources and memory. When the complete process is completed with these reduced resolution versions, the process is restarted again with the full resolution picture, thus requiring more processing time.

In another embodiment, the captured images are first stabilized to avoid any perturbation from potential movements during the capture. Although the use of a tripod is recommended during the capture, some small jitter may still exist and should preferably be corrected before using the images in the process. This is done using conventional image stabilization techniques, well known by the person skilled in the art of digital imaging.

## Claims

1. A device (100) for producing an image of a scene, the device comprising:
- a camera (120) configured to capture digital photographs of the scene, each digital photograph comprising an array of pixels;
- memory (130) to store a set of digital photographs of the scene; and
- a processor (110) configured to:
- iterate until a stopping condition is met, wherein an iteration comprises:
- capturing a digital photograph of the scene and append the digital photograph to the set of digital photographs of the scene
- generating an intermediate image from the set of digital photographs by, for each pixel of the intermediate image, selecting a corresponding pixel value from a digital photograph of the set of digital photographs of the scene; and
- determining whether the stopping condition is met and in this case stop the iteration;
- output the intermediate image as final image of the scene.

2. The device according to claim 1 further comprising a screen (150) configured to display the intermediate images.

3. The device according to claim 1 where the stopping condition is one of the following conditions:
- the number of digital photographs captured is higher than a threshold;
- the number of pixels changing between two consecutive intermediate images is below a threshold;
- the number of pixels changing between two consecutive intermediate images is below a threshold and the changing pixel are not concentrated in a particular area; and
- the minimal trust level for all pixels is higher than a threshold, the trust level being computed for each pixel by dividing the number of occurrences of the selected value of the pixel by the total number of captures.

4. The device according to claim 1 wherein the stopping condition is determined by combining at least two unitary conditions, wherein the unitary conditions are:
- the number of digital photographs captured is higher than a threshold;
- the number of pixels changing between two consecutive intermediate images is below a threshold;
- the number of pixels changing between two consecutive intermediate images is below a threshold and the changing pixel are not concentrated in a particular area; and
- the minimal trust level for all pixels is higher than a threshold, the trust level being computed for each pixel by dividing the number of occurrences of the selected value of the pixel by the total number of captures.

5. The device according to claim 1 wherein the stopping condition must be met multiple times in a row to stop the iteration.

6. The device according to claim 1 wherein the processor is further configured to select, for each pixel, the corresponding pixel value with the highest occurrence among the set of digital photographs.

7. The device according to claim 1 wherein the processor is further configured to perform the iteration in a first time on downscaled images and when the criterion for output is satisfied, perform the iteration a second time on the full resolution images.

8. A method for producing an image of a scene, the method comprising:
- iterating until a stopping condition is met, wherein an iteration comprises:
- capturing (310) a digital photograph of the scene and appending to a set of digital photographs of the scene;
- generating (320) an intermediate image from the set of digital photographs by, for each pixel of the intermediate image, selecting a corresponding pixel value from a digital photograph of the set;
- determining (340) whether the stopping condition is met and in this case stop the iteration;
- outputting the intermediate image.

9. The method of claim 9 wherein, for the selection of each pixel, the pixel value with the highest occurrence among the set of digital photographs is selected.

10. The method according to claim 9 where the stopping condition is one of the following conditions:
- the number of digital photographs captured is higher than a threshold;
- the number of pixels changing between two consecutive intermediate images is below a threshold;
- the number of pixels changing between two consecutive intermediate images is below a threshold and the changing pixel are not concentrated in a particular area; and
- the minimal trust level for all pixels is higher than a threshold, the trust level being computed for each pixel by dividing the number of occurrences of the selected value of the pixel by the total number of captures.

11. The method according to claim 9 wherein the stopping condition is determined by combining at least two unitary conditions, wherein the unitary conditions are:
- the number of digital photographs captured is higher than a threshold;
- the number of pixels changing between two consecutive intermediate images is below a threshold;
- the number of pixels changing between two consecutive intermediate images is below a threshold and the changing pixel are not concentrated in a particular area; and
- the minimal trust level for all pixels is higher than a threshold, the trust level being computed for each pixel by dividing the number of occurrences of the selected value of the pixel by the total number of captures.

12. The device according to claim 1 wherein the stopping condition must be met multiple times in a row to stop the iteration.

13. The method of claim 9 wherein the iteration is performed in a first time on downscaled images and when the criterion for output is satisfied, the iteration is performed a second time on the full resolution images

14. Computer program comprising program code instructions executable by a processor (110) for implementing the steps of a method according to at least one of claims 9 to 13.

15. Computer program product which is stored on a non-transitory computer readable medium (190) and comprises program code instructions executable by a processor (110) for implementing the steps of a method according to at least one of claims 9 to 13.
